(19) **Europäisches Patentamt / European Patent Office / Office européen des brevets**

(11) **EP 1 981 160 B1**

(12) **FASCICULE DE BREVET EUROPEEN**

(45) Date de publication et mention
de la délivrance du brevet:
**12.11.2014 Bulletin 2014/46**

(51) Int Cl.:
**H02M 7/48** (2007.01)     **H02M 1/32** (2007.01)

(21) Numéro de dépôt: **08103424.1**

(22) Date de dépôt: **08.04.2008**

(54) **Méthode et système de gestion de la température dans un variateur de vitesse**

Verfahren und Vorrichtung zur Temperaturregelung in einem Drehzahlregler

Method and system for managing the temperature in a speed controller

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **12.04.2007 FR 0754400**

(43) Date de publication de la demande:
**15.10.2008 Bulletin 2008/42**

(73) Titulaire: **Schneider Toshiba Inverter Europe SAS
27120 Pacy sur Eure (FR)**

(72) Inventeur: **Grbovic, Petar
27200, VERNON (FR)**

(74) Mandataire: **Bié, Nicolas et al
Schneider Electric Industries SAS
Service Propriété Industrielle
35 rue Joseph Monier - CS 30323
92506 Rueil-Malmaison Cedex (FR)**

(56) Documents cités:
**JP-A- 2006 254 574     US-A- 5 923 135
US-B1- 6 215 681**

- **RAY B ED - INSTITUTE OF ELECTRICAL AND ELECTRONICS ENGINEERS: "High-reliability space power converters: design and analysis issues" 37TH INTERSOCIETY ENERGY CONVERSION ENGINEERING CONFERENCE. (IECEC). WASHINGTON, DC, JULY 29 - 31, 2002, IECEC. PROCEEDINGS OF THE INTERSOCIETY ENERGY CONVERSION ENGINEERING CONFERENCE, NEW YORK : IEEE, US, 29 juillet 2002 (2002-07-29), pages 242-247, XP010767032 ISBN: 0-7803-7296-4**
- **SKIBINSKI G L ET AL: "Thermal parameter estimation using recursive identification" CONFERENCE RECORD OF THE INDUSTRY APPLICATIONS SOCIETY ANNUAL MEETING. SEATTLE, OCT. 7 - 12, 1990, NEW YORK, IEEE, US, vol. VOL. 2 MEETING 25, 7 octobre 1990 (1990-10-07), pages 1581-1588, XP010034981 ISBN: 0-87942-553-9**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

**Description**

La présente invention se rapporte à une méthode de gestion de la température mise en oeuvre dans un variateur de vitesse. L'invention concerne également un système de gestion de la température dans un variateur de vitesse.

Un variateur de vitesse comporte plusieurs modules semi-conducteurs de puissance commandés pour fournir une tension pulsée à une charge électrique. Chaque module semi-conducteur de puissance est par exemple composé d'un boîtier renfermant deux transistors de type IGBT ("Isolated Gate Bipolar Transistor") associés chacun à une diode de roue libre (FWD pour "Freewheeling Diode"). Un composant semi-conducteur du type transistor IGBT est caractérisé notamment par sa température de jonction et sa température de jonction-boîtier. Un dissipateur thermique est monté sur les modules afin de dissiper la chaleur dégagée par les modules en fonctionnement.

Les transistors IGBT utilisés dans les modules semi-conducteurs de puissance sont les composants les plus importants et les plus chers employés dans un variateur de vitesse. Il est donc nécessaire de les préserver. Pour cela, leur température de jonction absolue ne doit pas dépasser une valeur limite spécifiée par le fabricant et leur température de jonction-boîtier doit également être maintenue sous une valeur limite. Par exemple, si le composant semi-conducteur est en silicium, la valeur limite de la température de jonction absolue est de 150°C et la valeur limite de la température de jonction-boîtier est de 65°C. Si l'une de ces valeurs limites est dépassée, le composant semi-conducteur se dégrade ce qui peut entraîner des dysfonctionnements importants dans le variateur de vitesse.

Comme les modules semi-conducteurs de puissance sont intégrés dans des variateurs de plus en plus compacts, leur dissipation thermique est de plus en plus difficile et la marge entre les températures de fonctionnement normales des composants semi-conducteurs et les valeurs limites se trouve de plus en plus restreinte. Par conséquent il est nécessaire de mettre en oeuvre dans le variateur une méthode de gestion de la température des composants semi-conducteurs.

Pour cela il existe plusieurs possibilités selon que le variateur comporte un ou plusieurs capteurs de température. En effet, lorsque les semi-conducteurs de puissance sont répartis en trois modules distincts comportant chacun deux transistors IGBT et deux diodes à roue libre, la gestion de la température n'est pas la même si on utilise un capteur de température par module ou un seul capteur de température pour l'ensemble des modules. Dans le premier cas, si le capteur de température est monté directement sous le boîtier du module, la température mesurée est celle du boîtier du module et peut être traitée directement. En revanche, dans le second cas, si le capteur de température est unique et placée par exemple sur le dissipateur thermique à une certaine distance des modules, la température qui y sera mesurée ne sera pas conforme à la température boîtier des modules. Dans ce dernier cas, en vue d'effectuer la gestion appropriée, il est souvent nécessaire de procéder à des estimations pour connaître la température de jonction des composants semi-conducteurs.

Des méthodes de gestion de la température des modules semi-conducteurs d'un variateur de vitesse ont déjà été proposées dans l'art antérieur.

Le document EP0792008 décrit une méthode et un appareil pour protéger les modules semi-conducteurs de puissance d'un variateur. La méthode consiste à calculer les pertes calorifiques des composants semi-conducteurs et l'augmentation de la température de jonction-boîtier. Si L'augmentation de la température est supérieure à une valeur limite déterminée, le cycle de fonctionnement des modules semi-conducteurs est ajusté de manière à réduire le courant de sortie du variateur.

Le document JP2005143232 décrit également une méthode de gestion de la température des modules semi-conducteurs de puissance dans un variateur de vitesse. Cette méthode consiste à commander le flux de courant à travers le variateur en fonction de la température de jonction des composants semi-conducteurs.

Le document US5,923,135 décrit un appareil de commande d'un moteur électrique comportant un circuit de commande doté de plusieurs modules semi-conducteurs. Cet appareil comporte en outre des moyens d'estimation de la température de jonction des composants de chaque module à partir d'une température mesurée, des moyens pour comparer la température de jonction obtenue avec une valeur limite et des moyens pour ajuster la sortie du circuit de commande en vue de réguler la température de jonction à une valeur inférieure ou égale à la valeur limite autorisée. Ce document propose notamment un modèle thermique pour chaque module. Ce modèle thermique ne tient cependant pas compte de l'environnement de chaque module et notamment de l'influence en température des autres modules sur le module surveillé.

Le but de l'invention est de proposer une méthode et un système de gestion de la température des modules semi-conducteurs de puissance d'un variateur de vitesse doté d'un seul capteur de température.

Ce but est atteint par une méthode de gestion de la température mise en oeuvre dans un variateur de vitesse, ledit variateur comprenant :

-   un ou plusieurs modules comportant chacun un boîtier renfermant un semi-conducteur de puissance destiné à fournir une tension pulsée à une charge électrique, chaque module étant caractérisé par une température de jonction,

- un dissipateur thermique pour dissiper la chaleur générée par chaque module,

- un capteur de température monté sur le dissipateur thermique,

ladite méthode étant caractérisée en ce que, pour un module, elle consiste à :

- déterminer par estimation une température boîtier du module à partir d'un modèle thermique prédéfini du dissipateur, d'une température mesurée par le capteur et des pertes moyennes de puissance subies par le module, ledit modèle thermique prédéfini du dissipateur intégrant les trans-impédances thermiques représentatives de l'influence thermique d'un module sur un autre et vice-versa,

- déterminer une température de jonction-boîtier à partir de la température boîtier du module et d'une valeur limite de la température de jonction,

- limiter la température de jonction-boîtier obtenue à une valeur limite prédéterminée de la température de jonction boîtier.

Selon l'invention, le modèle thermique du dissipateur est défini par la relation suivante :

$$\begin{bmatrix} T_{C\_U}(s) \\ T_{C\_V}(s) \\ T_{C\_W}(s) \end{bmatrix} = \underbrace{\begin{bmatrix} Z_{UU}(s) & Z_{VU}(s) & Z_{WU}(s) \\ Z_{UV}(s) & Z_{VV}(s) & Z_{WV}(s) \\ Z_{UW}(s) & Z_{VW}(s) & Z_{WW}(s) \end{bmatrix}}_{Z_{jk}(s)} \cdot \begin{bmatrix} P_U(s) \\ P_V(s) \\ P_W(s) \end{bmatrix} + \begin{bmatrix} 1 \\ 1 \\ 1 \end{bmatrix} \cdot T_{SN}$$

dans laquelle :

- $T_{C\_U}$, $T_{C\_V}$ et $T_{C\_W}$ représentent les températures boîtier de chaque module placé respectivement sur les phases *U, V* et *W.*

- $Z_{UU}$, $Z_{VV}$ et $Z_{WW}$ correspondent à l'augmentation de température due à l'effet de cloche et au contact thermique non idéal existant entre le boîtier du module et le dissipateur thermique.

- $Z_{VU}$, $Z_{WU}$, $Z_{UV}$, $Z_{WV}$, $Z_{UW}$ et $Z_{VW}$ sont les trans-impédances thermiques représentatives de l'influence thermique d'un module sur un autre et vice-versa,

- $T_{SN}$ est la température mesurée par le capteur de température.

Selon une particularité, les variables du modèle thermique sont déterminées préalablement en injectant une puissance dans chacune des phases indépendamment et en mesurant l'effet en température produit sur le module de chaque phase.

Selon une autre particularité, la méthode consiste à limiter la température de jonction-boîtier du module obtenue à une valeur limite prédéterminée de la température de jonction boîtier en tenant compte du module positionné dans le variateur dans la situation thermiquement la moins avantageuse.

Selon une autre particularité, la température boîtier du module est estimée à partir de la fréquence angulaire de commande appliquée à la charge.

Selon une autre particularité, les pertes moyennes de puissance sont calculées à partir du courant de charge, de la fréquence de commutation des transistors du module, de la tension mesurée sur le bus continu du variateur et de paramètres spécifiques au module.

L'invention concerne également un système de gestion de la température dans un variateur de vitesse comprenant des moyens de traitement associés à une mémoire et à des moyens de commande des modules du variateur pour réguler la température et mettre en oeuvre la méthode définie ci-dessus.

D'autres caractéristiques et avantages vont apparaître dans la description détaillée qui suit en se référant à un mode de réalisation donné à titre d'exemple et représenté par les dessins annexés sur lesquels :

- la figure 1 représente de manière schématique un variateur de vitesse tel qu'utilisé dans l'invention,

- la figure 2 représente le modèle thermique du dissipateur utilisé dans la méthode et le système de l'invention,

- les figures 3A à 3C illustrent les procédures mises en oeuvre pour déterminer la réponse en température de chacun des transistors des modules lorsqu'une puissance est injectée respectivement dans les phases U, V et W,

- la figure 4 représente sous forme de bloc diagramme la méthode de détermination de la température de jonction boîtier de référence.

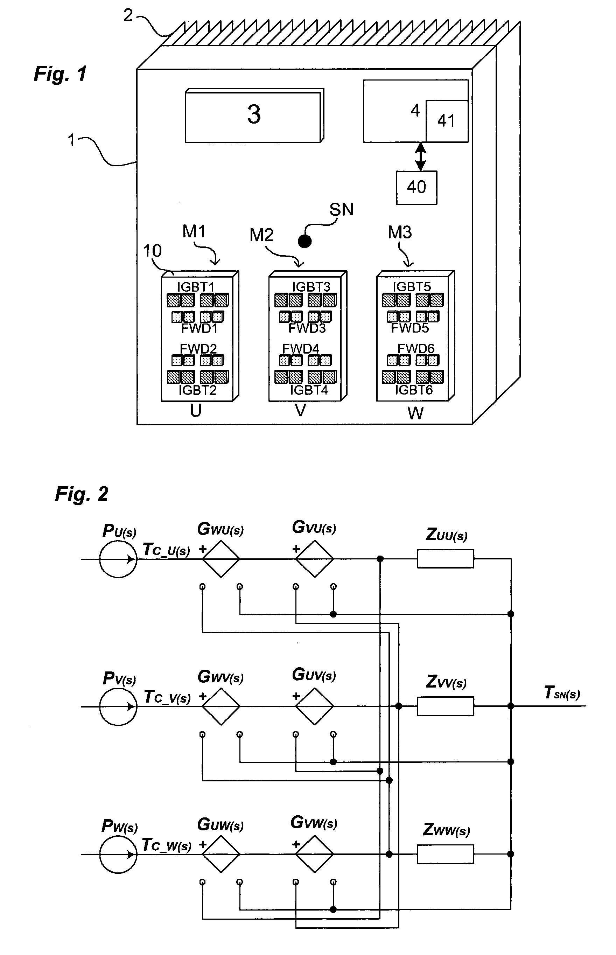

En référence à la figure 1, un variateur de vitesse 1 comporte une carcasse renfermant par exemple trois modules M1, M2, M3 semi-conducteur de puissance dotés chacun de deux transistors de type IGBT (IGBT1 à IGBT6) et de deux diodes antiparallèles, également appelées diodes de roue libre (FWD pour "Free Wheeling Diode") (FWD1 à FWD6). Sur sa carcasse, le variateur 1 comporte vers l'arrière un dissipateur thermique 2 permettant de dissiper la chaleur générée par les modules en fonctionnement. Le variateur 1 comporte en outre un redresseur d'entrée 3 pour alimenter les modules M1, M2, M3 en courant continu et ainsi produire une tension pulsée à une charge électrique connectée au variateur 1.

Dans le variateur 1, les modules M1, M2, M3 sont par exemple situés en face de la partie basse du dissipateur 2 tandis que le redresseur d'entrée 3 est placé en face de la partie haute du dissipateur 2. Un capteur de température SN est par exemple placé au niveau du centre du dissipateur thermique 2.

Classiquement, un module M1 se présente sous la forme d'un boîtier plastique doté d'une semelle ou base métallique 10, par exemple en cuivre. Les composants semi-conducteurs reposent sur un substrat céramique chargé de l'isolation électrique avec la base 10, celle-ci étant en contact avec le dissipateur 2. Le module est par exemple rendu solidaire du dissipateur par l'intermédiaire de vis.

L'invention consiste à mettre en oeuvre une méthode de gestion de la température au sein du variateur afin de préserver les composants semi-conducteurs de puissance. Cette méthode est mise en oeuvre grâce à un système intégré au variateur 1 comportant des moyens de traitement 4 associés à au moins une mémoire 40 et aptes à agir sur des moyens de commande des modules pour effectuer la régulation de la température. Ces moyens de traitement 4 comportent notamment des moyens de calcul 41 pour mettre en oeuvre la méthode décrite ci-dessous.

Pour mettre en oeuvre cette méthode, le système mémorise un modèle thermique prédéfini du dissipateur thermique. Ce modèle montré en figure 2 est construit en considérant l'équivalence entre les propriétés thermiques et les propriétés électriques au sein du variateur.

Ce modèle thermique comporte les trois sources d'énergie $P_U(s)$, $P_V(s)$ et $P_W(s)$ permettant de fournir en courant chacune des phases $U, V, W$. Le passage d'un courant dans chaque module M1, M2, M3 entraîne des pertes provoquant une augmentation des températures boîtier $T_{C\_U}$, $T_{C\_V}$ et $T_{C\_W}$ de chaque module. $G_{VU}$, $G_{WU}$, $G_{UV}$, $G_{WV}$, $G_{UW}$ et $G_{VW}$ représentent les influences thermiques réciproques entre les modules. $Z_{UU}$, $Z_{VV}$ et $Z_{WW}$ représentent les impédances propres dues à l'augmentation de température générée par l'effet de cloche et à la liaison thermique non idéale entre le boîtier de chaque module et le dissipateur thermique. L'effet de cloche représente l'impédance de dispersion thermique du dissipateur thermique et plus précisément le gradient de température entre le boîtier d'un module et le dissipateur.

Ce modèle thermique peut également être défini par la relation suivante :

$$\begin{bmatrix} T_{C\_U}(s) \\ T_{C\_V}(s) \\ T_{C\_W}(s) \end{bmatrix} = \underbrace{\begin{bmatrix} Z_{UU}(s) & Z_{VU}(s) & Z_{WU}(s) \\ Z_{UV}(s) & Z_{VV}(s) & Z_{WV}(s) \\ Z_{UW}(s) & Z_{VW}(s) & Z_{WW}(s) \end{bmatrix}}_{Z_{jk}(s)} \cdot \begin{bmatrix} P_U(s) \\ P_V(s) \\ P_W(s) \end{bmatrix} + \begin{bmatrix} 1 \\ 1 \\ 1 \end{bmatrix} \cdot T_{SN} \qquad (1)$$

Dans laquelle :

- $T_{C\_U}$, $T_{C\_V}$ et $T_{C\_W}$ représentent les températures boîtier de chaque module M1, M2, M3 placé respectivement sur les phases $U$, $V$ et $W$.

- $Z_{UU}$, $Z_{VV}$ et $Z_{WW}$ sont les impédances propres des modules correspondant à l'effet de cloche et au contact thermique non idéal existant entre le boîtier du module et le dissipateur thermique.

- $Z_{VU}$, $Z_{WU}$, $Z_{UV}$, $Z_{WV}$, $Z_{UW}$ et $Z_{VW}$ sont les trans-impédances thermiques représentatives de l'influence thermique d'un module sur un autre et vice-versa.

De manière plus précise, les trans-impédances thermiques $Z_{VU}$, $Z_{WU}$, $Z_{UV}$, $Z_{WV}$, $Z_{UW}$ et $Z_{VW}$ sont définies par les relations suivantes :

$$Z_{VU}(s) = Z_{VV}(s)G_{VU}(s)\,;\ Z_{WU}(s) = Z_{WW}(s)G_{WU}(s)\,;\ Z_{UV}(s) = Z_{UU}(s)G_{UV}(s)\,;$$

$$Z_{WV}(s) = Z_{WW}(s)G_{WV}(s)\,,\ Z_{UW}(s) = Z_{UU}(s)G_{UW}(s)\,;\ Z_{VW}(s) = Z_{WW}(s)G_{VW}(s)\quad(2)$$

dans lesquelles $G_{VU}$, $G_{WU}$, $G_{UV}$, $G_{WV}$, $G_{UW}$ et $G_{VW}$ représentent les influences thermiques d'un module sur un autre.

Afin de déterminer les valeurs du modèle thermique du dissipateur, une série d'expérience est menée lors de la conception du variateur.

Le modèle thermique n'est pas symétrique car la température boîtier d'un module placé sur le côté du dissipateur (cas des modules M1, M3 des phases *U, W*) est certainement plus élevée que celle d'un module situé au centre du dissipateur où les échanges thermiques sont plus faciles. Partant de là et pour des raisons de simplicité, le système de gestion de la température de l'invention n'est mis en oeuvre que pour un seul module. Pour cela, le système prend en compte le cas le moins avantageux et calcule la température boîtier d'un module situé sur le côté par rapport au dissipateur. Il s'agit par exemple du module M1 de la phase U.

Les valeurs de l'impédance propre $Z_{UU}$ et des trans-impédances $Z_{VU}$, $Z_{WU}$ relatives au module M1 de la phase *U* sont donc déterminées de la manière détaillée ci-dessous.

A partir du modèle thermique défini ci-dessus, la température boîtier $T_{C\_U}$ du module M1 situé sur la phase *U* est obtenue par la relation suivante :

$$T_{C\_U}(s) = P_U(s)Z_{UU}(s) + P_V(s)Z_{VU}(s) + P_W(s)Z_{WU}(s) + T_{SN}\,.\qquad(3)$$

Dans laquelle :

$P_U$, $P_V$ et $P_W$ représentent les puissances injectées dans chacune des phases *U, V* et *W*.

En considérant par exemple qu'une puissance $P_U$ est injectée dans la phase *U* alors que les puissances $P_V$ et $P_W$ injectées dans les deux autres phases *V* et *W* sont nulles, on obtient alors la relation suivante :

$$T_{C\_U}(s) = P_U(s)Z_{UU}(s)\big|_{P_V(s)=0;P_W(s)=0} + T_{SN}(s) = T_{C\_SN}(s) + T_{SN}(s)\qquad(4)$$

dans laquelle $T_{SN}$ est la température mesurée par le capteur SN placé au centre du dissipateur thermique.

La puissance injectée dans la phase *U* est une fonction créneau ayant une amplitude $P_0$ au moment zéro. On obtient alors :

$$P_U(t) = P_0 \cdot h(t) \qquad \Rightarrow \quad P_U(s) = \frac{P_0}{s}\qquad(5)$$

L'impédance thermique propre $Z_{uu}(s)$ devient alors :

$$Z_{UU}(s) = \frac{T_{C\_SN}(s)}{P_U(s)} = s\frac{\boldsymbol{L}(T_{C\_SN}(t))}{P_0} = \sum_{k=1}^{M}\frac{R_{VUk}}{1+s\tau_{VUk}} \qquad (6)$$

dans laquelle L est la transformation de Laplace et $T_{C\_SN}$ est la température boîtier-capteur définie à partir de la différence entre la température boîtier $T_{C\_U}$ et la température mesurée $T_{SN}$ par le capteur SN. La température $T_{C\_SN}$ prend notamment en compte les différentes autres sources de chaleur placées sous le même dissipateur 2 telles que celle représentée par le redresseur d'entrée 3.

La même méthode peut être appliquée pour les phases $V$ et $W$. La puissance est injectée dans chacune des phases $V$ ou $W$, les deux autres phases n'étant pas alimentées, et l'on mesure la réponse en température sur le module M1 de la phase $U$. Cette réponse en température sur le module M1 de la phase $U$, due au transfert horizontal de chaleur provenant des modules des phases $V$ et $W$, représente les trans-impédances thermiques $Z_{vu}$ et $Z_{wu}$.

$$Z_{VU}(s) = s\frac{\boldsymbol{L}(T_{C\_SN}(t))}{P_0} \cong \sum_{k=1}^{M}\frac{R_{VUk}}{1+s\tau_{VUk}} \qquad Z_{WU}(s) = s\frac{\boldsymbol{L}(T_{C\_SN}(t))}{P_0} \cong \sum_{k=1}^{P}\frac{R_{WUk}}{1+s\tau_{WUk}} \qquad (7)$$

En tenant compte des relations (6) et (7) définies ci-dessus et du fait que la réponse en température en fonction du temps peut être mise sous la forme d'une série exponentielle du second ordre, l'impédance propre $Z_{UU}$ et les trans-impédances $Z_{VU}$ et $Z_{WU}$ peuvent être définies par :

$$Z_{UU}(s) \cong \frac{R_{UU1}}{1+s\tau_{UU1}} + \frac{R_{UU2}}{1+s\tau_{UU2}}, \qquad\qquad Z_{VU}(s) \cong \frac{R_{VU1}}{1+s\tau_{VU1}} + \frac{R_{VU2}}{1+s\tau_{VU2}},$$

$$Z_{WU}(s) \cong \frac{R_{WU1}}{1+s\tau_{WU1}} + \frac{R_{WU2}}{1+s\tau_{WU2}}.(8)$$

Les résistances thermiques $R_{UU1}$, $R_{UU2}$, $R_{VU1}$, $R_{VU2}$, $R_{WU1}$ et $R_{WU2}$ et les constantes de temps $\tau_{UU1}$, $\tau_{UU2}$, $\tau_{VU1}$, $\tau_{VU2}$, $\tau_{WU1}$ et $\tau_{WU2}$ peuvent être calculées grâce à des algorithmes appropriés.

Les valeurs des paramètres du modèle thermique tels que l'impédance propre $Z_{UU}$ et les trans-impédances $Z_{VU}$ et $Z_{WU}$ sont donc déterminées une seule fois lors de la conception du variateur de vitesse grâce à une série d'expériences. Elles sont ensuite utilisées pour gérer la température d'un module.

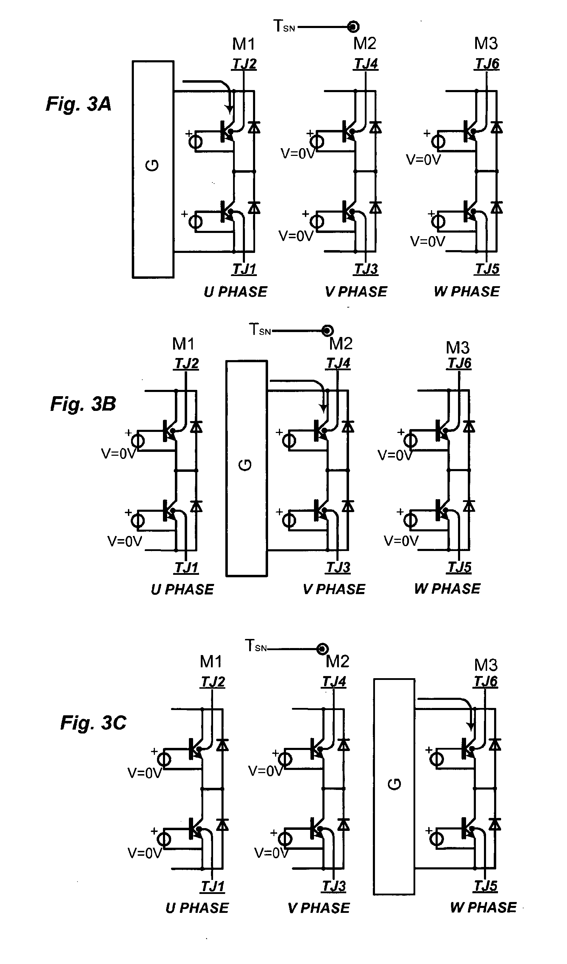

Pour calculer ces valeurs, on utilise donc un capteur de température de jonction des composants semi-conducteurs du module M1 de la phase $U$, on injecte une puissance constante uniquement à travers les composants du module M1, et on enregistre les températures de jonction Tj1 et Tj2 (figure 3A) ainsi mesurées grâce audits capteurs. A partir de ces températures de jonction Tj1, Tj2, de l'impédance jonction-boîtier définie dans les spécifications du module et de la puissance injectée dans le module, il est ainsi possible de déterminer la température boîtier $T_{C\_U}$ du module M1 dans ces conditions. En ajoutant cette température boîtier $T_{C\_U}$ du module M1 à une température $T_{SN}$ mesurée simultanément par le capteur SN placé sur le dissipateur 2, on obtient alors la température boîtier-capteur $T_{C\_SN}$. A partir de $T_{C\_SN}$, il est ainsi possible de déterminer l'impédance propre $Z_{UU}$ définie ci-dessus pour le module M1. En injectant une puissance constante uniquement dans les composants semi-conducteurs du module M2 de la phase V (figure 3B) et en mesurant la réponse en température (Tj1, Tj2) de cette action sur le module M1, on détermine la trans-impédance $Z_{VU}$. On réalise de même avec le module M3 de la phase W pour déterminer la trans-impédance $Z_{WU}$ (figure 3C). Il est possible de procéder de la même manière pour calculer les impédances propres $Z_{VV}$ et $Z_{WW}$ des modules M2 et M3 et les trans-impédances $Z_{UV}$, $Z_{WV}$ et $Z_{UW}$, $Z_{VW}$.

Selon l'invention, ce modèle thermique, dont les valeurs sont mémorisées dans le variateur 1, est ensuite employé pour réguler la température du module M1 de la phase U et ainsi éviter sa surchauffe ou sa dégradation lors du fonctionnement normal du variateur.

Pour cela, il s'agit de déterminer en permanence ou à intervalles réguliers l'évolution de la température boîtier-capteur $T_{C\_SN}$, cette température correspondant au gradient de température entre le boîtier du module et le dissipateur thermique 2 au sein duquel est placé un unique capteur SN.

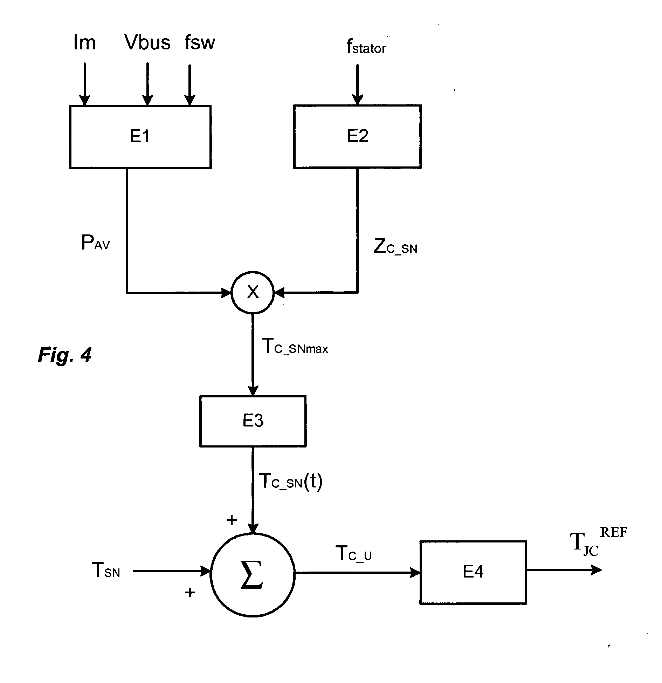

La méthode mise en oeuvre dans le variateur de vitesse 1 (voir figure 4) calcule les pertes de puissance moyennes du module M1 de la phase *U* (étape E1, figure 4).

En partant du principe que les courants moteur sont symétriques et sinusoïdaux et que la modulation d'impulsion est sinusoïdale, le courant moteur Im pour la phase *U* et l'index de modulation m de la commande MLI (Modulation à largeur d'impulsions ou PWM) pour la phase *U* sont définis par les relations suivantes :

$$I_U(t) = I_{PEAK} \sin(\omega_0 t - \varphi) \text{ et } m_U(t) = \frac{1}{2}(1 + M \sin(\omega_0 t)), \qquad (9)$$

Dans lesquelles $I_{PEAK}$ est le maximum de courant moteur $I_U$ calculé à partir de mesures des courants moteur sur les trois phases, $\omega_0$ est la fréquence angulaire de commande du moteur (dépendante de la fréquence du stator du moteur) et $\varphi$ est le décalage de phase du courant moteur.

Après des approximations et des hypothèses, l'expression des pertes moyennes de puissance du module devient :

$$P_{AV} \cong I_{PEAK}\left(\frac{1}{\pi}(V_{CE0} + V_{DF0}) + \frac{2(E_{ON} + E_{OFF} + E_{QN})}{\pi V_N I_N}V_{BUS}f_{SW} + I_{PEAK}\left(\frac{(r_{CE} + r_D)}{4}\right)\right).(10)$$

dans laquelle :

- $V_{CE0}$, $V_{DF0}$, $r_{CE}$ et $r_D$ sont des paramètres statiques d'un transistor IGBT et de la diode de roue libre FWD, tels que sa tension seuil et sa résistance.
- $V_{BUS}$ est la tension mesurée sur le bus continu du variateur de vitesse,
- $f_{SW}$ est la fréquence de commutation des transistors IGBT du module,
- $V_N$ et $I_N$ sont respectivement la tension nominale et l'intensité nominale du moteur,
- $E_{ON}$, $E_{OFF}$ et $E_{QN}$ sont les énergies de commutation du transistor IGBT précisées dans les spécifications du module au courant nominal $I_N$ et à la tension nominale $V_N$.

Le maximum de la température boîtier-capteur à l'état stable est traité à partir du modèle thermique défini ci-dessus de manière à obtenir la relation suivante :

$$T_{C\_SN}\big|_{max} = P_{AV} \cdot Z_{C\_SN}(\omega_0) \qquad (11)$$

L'impédance thermique désigné $Z_{C\_SN}(\omega_0)$ est également appelée impédance d'effet de cloche puisqu'elle tient compte de l'effet de cloche créé par le dissipateur thermique 2. Elle tient également compte de la liaison thermique entre la base 10 du module M1 et le dissipateur 2. Elle est notamment calculée à partir du modèle thermique définie ci-dessus et en figure 5 et de la fréquence angulaire de commande $\omega_0$. Cette impédance suit une fonction non linéaire qu'il est difficile d'implémenter dans l'unité de commande du variateur. De cette manière, cette fonction est par exemple approximée par une fonction exponentielle.

A partir de $Z_{C\_SN}(\omega_0)$, il est ainsi possible de calculer la réponse en température correspondant au gradient entre le boîtier du module M1 et le dissipateur thermique 2. Cette réponse correspond à la température générée par l'effet de cloche. Elle est calculée en passant la réponse à l'état stable définie dans la relation (11) ci-dessus à travers un filtre générique représentant la dynamique du dissipateur thermique (étape E3, figure 4). De cette manière on obtient la température boîtier-capteur $T_{C\_SN}$.

Selon l'invention, il est alors possible de déterminer la température boîtier $T_{C\_U}$ du module M1 de la phase *U* en ajoutant la température boîtier-capteur $T_{C\_SN}$ à la température $T_{SN}$ mesurée par le capteur de température SN placé sur le dissipateur 2.

Selon l'invention, la méthode de gestion de la température permet ensuite de déterminer une température de jonction-boîtier de référence $T_{JC}^{REF}$ (étape E4, figure 4). La température de jonction-boîtier réelle est ensuite régulée à cette température de jonction-boîtier de référence $T_{JC}^{REF}$.

Afin de déterminer la température de jonction-boîtier de référence, la méthode de l'invention consiste à tenir compte des deux valeurs limites $T_{Jmax}$ et $T_{JCmax}$ connues spécifiées respectivement pour la température de jonction d'un module et la température de jonction-boîtier du module. Pour cela, la température de jonction-boîtier de référence est calculée à partir des équations suivantes :

$$T_{JC}^{REF}(t) = \begin{cases} T_{JC} = T_{Jmax} - T_{C\_SN}(t) - T_{SEN}(t) \ldots si \ldots T_{JC} < T_{JCmax} \\ T_{JCmax} \ldots\ldots\ldots\ldots\ldots\ldots\ldots\ldots si \ldots T_{JC} \geq T_{JCmax} \end{cases}$$

La température de jonction-boîtier de référence $T_{JC}^{REF}$ est donc égale à une température de jonction-boîtier $T_{JC} = T_{Jmax} - T_{C\_SN}(t) - T_{SEN}(t)$ si la température $T_{JC}$ déterminée est inférieure à la valeur limite prédéterminée $T_{JCmax}$ de la température de jonction-boîtier ou égale à $T_{JCmax}$ si $T_{JC}$ est supérieure ou égale à $T_{JCmax}$.

La régulation de la température de jonction-boîtier réelle à la température de jonction-boîtier de référence $T_{JC}^{REF}$ est réalisée selon des méthodes connues. Elle peut par exemple être réalisée en limitant le courant de sortie du variateur.

Il est bien entendu que l'on peut, sans sortir du cadre de l'invention, imaginer d'autres variantes et perfectionnements de détail et de même envisager l'emploi de moyens équivalents.

**Revendications**

1.  Méthode de gestion de la température mise en oeuvre dans un variateur de vitesse (1), ledit variateur comprenant :

    - plusieurs modules (M1, M2, M3) comportant chacun un boîtier renfermant un semi-conducteur de puissance (IGBT1 à IGBT6) destiné à fournir une tension pulsée à une charge électrique, chaque module étant **caractérisé par** une température de jonction,
    - un dissipateur thermique (2) pour dissiper la chaleur générée par chaque module (M1, M2, M3),
    - un capteur de température (SN) monté sur le dissipateur thermique (2), ladite méthode étant **caractérisée en ce que**, pour un module (M1), elle consiste à
    - déterminer par estimation une température boîtier ($T_{C\_U}$) du module à partir d'un modèle thermique prédéfini du dissipateur (2), d'une température mesurée ($T_{SN}$) par le capteur (SN) et des pertes moyennes de puissance ($P_{AV}$) subies par le module, ledit modèle thermique prédéfini du dissipateur (2) intégrant les trans-impédances thermiques ($Z_{VU}$, $Z_{WU}$, $Z_{UV}$, $Z_{WV}$, $Z_{UW}$, $Z_{VW}$) représentatives de l'influence thermique d'un module sur un autre et vice-versa,
    - déterminer une température de jonction-boîtier ($T_{JC}$) à partir de la température boîtier ($T_{C\_U}$) du module et d'une valeur limite ($Tj_{max}$) de la température de jonction,
    - limiter la température de jonction-boîtier ($T_{JC}$) obtenue à une valeur limite prédéterminée ($Tjc_{max}$) de la température de jonction-boîtier.

2.  Méthode selon la revendication 1, **caractérisée en ce que** le modèle thermique du dissipateur (2) est défini par la relation suivante :

$$\begin{bmatrix} T_{C\_U}(s) \\ T_{C\_v}(s) \\ T_{C\_w}(s) \end{bmatrix} = \underbrace{\begin{bmatrix} Z_{UU}(s) & Z_{VU}(s) & Z_{WU}(s) \\ Z_{UV}(s) & Z_{VV}(s) & Z_{WV}(s) \\ Z_{UW}(s) & Z_{VW}(s) & Z_{WW}(s) \end{bmatrix}}_{Z_{jk}(s)} \cdot \begin{bmatrix} P_{U}(s) \\ P_{V}(s) \\ P_{W}(s) \end{bmatrix} + \begin{bmatrix} 1 \\ 1 \\ 1 \end{bmatrix} \cdot T_{SN}$$

dans laquelle :

    - $T_{C\_U}$, $T_{C\_V}$ et $T_{C\_W}$ représentent les températures boîtier de chaque module placé respectivement sur les phases *U*, *V* et *W*.
    - $Z_{UU}$, $Z_{VV}$ et $Z_{MW}$ correspondent à l'augmentation de température due à l'effet de cloche et au contact thermique non idéal existant entre le boîtier du module et le dissipateur thermique.
    - $Z_{VU}$, $Z_{WU}$, $Z_{UV}$, $Z_{WV}$, $Z_{UW}$ et $Z_{VW}$ sont les trans-impédances thermiques représentatives de l'influence thermique d'un module sur un autre et vice-versa,
- $T_{SN}$ est la température mesurée par le capteur de température.

3. Méthode selon la revendication 1 ou 2, **caractérisée en ce que** les variables du modèle thermique sont déterminées préalablement en injectant une puissance dans chacune des phases indépendamment et en mesurant l'effet en température produit sur le module (M1, M2, M3) de chaque phase.

4. Méthode selon l'une des revendications 1 à 3, **caractérisée en ce qu'**elle consiste à limiter la température de jonction-boîtier ($T_{JC}$) obtenue à une valeur limite prédéterminée ($Tjc_{max}$) de la température de jonction-boîtier en tenant compte du module (M1) positionné dans le variateur (1) dans la situation thermiquement la moins avantageuse.

5. Méthode selon l'une des revendications 1 à 4, **caractérisée en ce que** la température boîtier ($T_{C\_U}$) du module est estimée à partir de la fréquence angulaire de commande ($\omega_0$) appliquée à la charge.

6. Méthode selon l'une des revendications 1 à 5, **caractérisée en ce que** les pertes moyennes de puissance ($P_{AV}$) sont calculées à partir du courant de charge (Im), de la fréquence de commutation des transistors du module (fsw), de la tension (Vbus) mesurée sur le bus continu du variateur (1) et de paramètres spécifiques au module.

7. Système de gestion de la température dans un variateur de vitesse (1) comportant plusieurs modules (M1, M2, M3) semi-conducteur de puissance aptes à fournir une tension pulsée à une charge électrique connectée au variateur (1), ledit système comprenant des moyens de traitement (4) associés à une mémoire (40) et à des moyens de commande des modules pour réguler la température, **caractérisé en ce qu'**il est apte à mettre en oeuvre la méthode définie dans l'une des revendications 1 à 6.

**Patentansprüche**

1. Verfahren zur Verwaltung der Temperatur, das in einem Drehzahlregler (1) angewendet wird, wobei der Regler enthält:

- mehrere Module (M1, M2, M3), die je ein Gehäuse aufweisen, das einen Leistungshalbleiter (IGBT1 bis IGBT6) umschließt, der dazu bestimmt ist, eine gepulste Spannung an eine elektrische Last zu liefern, wobei jedes Modul durch eine Sperrschichttemperatur gekennzeichnet ist,
- einen Wärmeableiter (2), um die von jedem Modul (M1, M2, M3) erzeugte Wärme abzuleiten,
- einen auf den Wärmeableiter (2) montierten Temperaturfühler (SN),
wobei das Verfahren **dadurch gekennzeichnet ist, dass** es für ein Modul (M1) darin besteht:
- durch Schätzung eine Gehäusetemperatur ($T_{C\_U}$) des Moduls ausgehend von einem vordefinierten Wärmemodell des Ableiters (2), einer vom Fühler (SN) gemessenen Temperatur ($T_{SN}$) und vom Modul erfahrenen mittleren Leistungsverlusten ($P_{AV}$) zu bestimmen, wobei das vordefinierte Wärmemodell des Ableiters (2) die Wärme-Transimpedanzen ($Z_{VU}$, $Z_{WU}$, $Z_{UV}$, $Z_{WV}$, $Z_{UW}$, $Z_{VW}$) umfasst, die für den Wärmeeinfluss eines Moduls auf ein anderes und umgekehrt repräsentativ sind,
- Bestimmen einer Gehäuse-Sperrschicht-Temperatur ($T_{JC}$) ausgehend von der Gehäusetemperatur ($T_{C\_U}$) des Moduls und von eines Grenzwert ($Tj_{max}$) der Sperrschichttemperatur,
- Begrenzen der erhaltenen Gehäuse-Sperrschicht-Temperatur ($T_{JC}$) auf einen vorbestimmten Grenzwert ($Tjc_{max}$) der Gehäuse-Sperrschicht-Temperatur.

2. Verfahren nach Anspruch 1, **dadurch gekennzeichnet, dass** das Wärmemodell des Ableiters (2) durch die folgende Beziehung definiert wird:

$$
\begin{bmatrix} T_{C\_U}(S) \\ T_{C\_V}(S) \\ T_{C\_W}(S) \end{bmatrix} = \underbrace{\begin{bmatrix} Z_{UU}(S) & Z_{VU}(S) & Z_{WU}(S) \\ Z_{UV}(S) & Z_{VV}(S) & Z_{WV}(S) \\ Z_{UW}(S) & Z_{VW}(S) & Z_{WW}(S) \end{bmatrix}}_{Z_{jk}(S)} \cdot \begin{bmatrix} P_U(S) \\ P_V(S) \\ P_W(S) \end{bmatrix} + \begin{bmatrix} 1 \\ 1 \\ 1 \end{bmatrix} \cdot T_{SN}
$$

wobei:

- $T_{C\_U}$, $T_{C\_V}$ und $T_{C\_W}$ die Gehäusetemperaturen jedes Moduls darstellen, das auf den Phasen U, V bzw. W angeordnet ist,
- $Z_{UU}$, $Z_{VV}$, und $Z_{WW}$, der Temperaturerhöhung aufgrund des Glockeneffekts und des nicht idealen Wärmekontakts zwischen dem Gehäuse des Moduls und dem Wärmeableiter entsprechen,
- $Z_{VU}$, $Z_{WU}$, $Z_{UV}$, $Z_{WV}$, $Z_{UW}$ und $Z_{VW}$, die für den Wärmeeinfluss eines Moduls auf ein anderes und umgekehrt repräsentativen Wärme-Transimpedanzen sind,
- $T_{SN}$ die vom Temperaturfühler gemessene Temperatur ist.

3. Verfahren nach Anspruch 1 oder 2, **dadurch gekennzeichnet, dass** die Variablen des Wärmemodells vorab bestimmt werden, indem eine Leistung unabhängig in jede der Phasen eingespeist wird, und indem die am Modul (M1, M2, M3) jeder Phase erzeugte Temperaturwirkung gemessen wird.

4. Verfahren nach einem der Ansprüche 1 bis 3, **dadurch gekennzeichnet, dass** es darin besteht, die erhaltene Gehäuse-Sperrschicht-Temperatur ($T_{JC}$) auf einen vorbestimmten Grenzwert ($Tjc_{max}$) der Gehäuse-Sperrschicht-Temperatur unter Berücksichtigung des Moduls (M1) zu begrenzen, das in der thermisch am wenigsten vorteilhaften Situation im Regler (1) positioniert ist.

5. Verfahren nach einem der Ansprüche 1 bis 4, **dadurch gekennzeichnet, dass** die Gehäusetemperatur ($T_{C\_U}$) des Moduls ausgehend von der an die Last angelegten Steuerwinkelgeschwindigkeit ($\omega_0$) geschätzt wird.

6. Verfahren nach einem der Ansprüche 1 bis 5, **dadurch gekennzeichnet, dass** die mittleren Leistungsverluste ($P_{AV}$) ausgehend vom Laststrom (Im), der Schaltfrequenz der Transistoren des Moduls (fsw), der am Gleichstrombus des Reglers (1) gemessenen Spannung (Vbus) und spezifischen Parametern des Moduls berechnet werden.

7. System zur Verwaltung der Temperatur in einem Drehzahlregler (1), der mehrere Leistungshalbleiter-Module (M1, M2, M3) aufweist, die eine gepulste Spannung an eine mit dem Regler (1) verbundene elektrische Last liefern können, wobei das System Verarbeitungseinrichtungen (4) enthält, die einem Speicher (40) und Steuereinrichtungen der Module zugeordnet sind, um die Temperatur zu regeln, **dadurch gekennzeichnet, dass** es das in einem der Ansprüche 1 bis 6 definierte Verfahren anwenden kann.

**Claims**

1. Method for managing the temperature implemented in a variable speed drive (1), said variable speed drive comprising:

- several modules (M1, M2, M3), each comprising a case containing a power semiconductor (IGBT1 to IGBT6) designed to provide a pulsed voltage to an electrical load, each module being **characterized by** a junction temperature;
- a heat sink (2) to dissipate the heat generated by each module (M1, M2, M3);
- a temperature sensor (SN) mounted on the heat sink (2);
said method being **characterized in that** for a module (M1) it consists in:
- estimating a case temperature ($T_{C\_U}$) of the module based on a predetermined thermal model of the sink (2), a temperature ($T_{SN}$) measured by the sensor (SN) and average power losses ($P_{AV}$) that the module undergoes, said predetermined thermal model of the sink (2) integrating the thermal transfer impedances ($Z_{VU}$, $Z_{WU}$, $Z_{UV}$, $Z_{WV}$, $Z_{UW}$ and $Z_{VW}$) representing the thermal influence of one module on another and vice versa;
- determining a junction-case temperature ($T_{JC}$) based on the case temperature ($T_{C\_U}$) of the module and a limiting value ($T_{Jmax}$) of the junction temperature; and
- limiting the junction-case temperature ($T_{JC}$) obtained to a predetermined limiting value ($T_{JCmax}$) of the junction-case temperature.

2. Method according to Claim 1, **characterized in that** the thermal model of the sink (2) is defined by the following equation:

$$\begin{bmatrix} T_{C\_U}(s) \\ T_{C\_V}(s) \\ T_{C\_W}(s) \end{bmatrix} = \underbrace{\begin{bmatrix} Z_{UU}(s) & Z_{VU}(s) & Z_{WU}(s) \\ Z_{UV}(s) & Z_{VV}(s) & Z_{WV}(s) \\ Z_{UW}(s) & Z_{VW}(s) & Z_{WW}(s) \end{bmatrix}}_{Z_{jk}(s)} \cdot \begin{bmatrix} P_U(s) \\ P_V(s) \\ P_W(s) \end{bmatrix} + \begin{bmatrix} 1 \\ 1 \\ 1 \end{bmatrix} \cdot T_{SN}$$

in which:

- $T_{C\_U}$, $T_{C\_V}$ and $T_{C\_W}$ represent the case temperatures of each module placed at the phases U, V and W respectively;
- Zuu, $Z_{VV}$ and $Z_{WW}$ correspond to the increase in temperature due to the ringing effect and to the non-ideal thermal contact existing between the module case and the heat sink;
- $Z_{VU}$, $Z_{WU}$, $Z_{UV}$, $Z_{WV}$, $Z_{UW}$ and $Z_{VW}$, are the thermal transfer impedances representing the thermal influence of one module on another and vice versa; and
- $T_{SN}$ is the temperature measured by the temperature sensor.

3. Method according to Claim 1 or 2, **characterized in that** the variables of the thermal model are determined in advance by independently injecting power in each of the phases and by measuring the effect on temperature produced on the module (M1, M2, M3) in each phase.

4. Method according to one of Claims 1 to 3, **characterized in that** the method consists in limiting the junction-case temperature ($T_{JC}$) obtained to a predetermined limiting value ($T_{JCmax}$) of the junction-case temperature while taking account of the module (M1) positioned in the variable speed drive (1) in the thermally least advantageous situation.

5. Method according to one of Claims 1 to 4, **characterized in that** the case temperature ($T_{C\_U}$) of the module is estimated based on the angular frequency of control ($\omega_0$) applied to the load.

6. Method according to one of Claims 1 to 5, **characterized in that** the average power losses ($P_{AV}$) are calculated based on the load current (Im), the switching frequency ($f_{sw}$) of the transistors in the module, the voltage ($V_{BUS}$) measured on the DC bus of the variable speed drive (1) and parameters specific to the module.

7. System for managing the temperature in a variable speed drive (1) comprising several semiconductor power modules (M1, M2, M3) able to provide a pulsed voltage to an electrical load connected to the variable speed drive (1), said system comprising processing means (4) connected with a memory (40) and means for controlling the modules in order to regulate the temperature, **characterized in that** it is able to implement the method defined in Claims 1 to 6.

**Fig. 1**

2

1

3

4 — 41

40

SN

M1   M2   M3

10

IGBT1   IGBT3   IGBT5
FWD1    FWD3    FWD5
FWD2    FWD4    FWD6
IGBT2   IGBT4   IGBT6

U        V        W

**Fig. 2**

$P_{U(s)}$   $G_{WU(s)}$   $G_{VU(s)}$   $Z_{UU(s)}$

$T_{C\_U(s)}$   +   +

$P_{V(s)}$   $G_{WV(s)}$   $G_{UV(s)}$   $Z_{VV(s)}$

$T_{C\_V(s)}$   +   +   $T_{SN(s)}$

$P_{W(s)}$   $G_{UW(s)}$   $G_{VW(s)}$   $Z_{WW(s)}$

$T_{C\_W(s)}$   +   +

*Fig. 3A*

M1  M2  M3

TJ2  TJ4  TJ6

T$_{SN}$

V=0V  V=0V

V=0V  V=0V

G

TJ1  TJ3  TJ5

U PHASE  V PHASE  W PHASE

*Fig. 3B*

T$_{SN}$

M1  M2  M3

TJ2  TJ4  TJ6

V=0V  V=0V

V=0V  V=0V

G

TJ1  TJ3  TJ5

U PHASE  V PHASE  W PHASE

*Fig. 3C*

T$_{SN}$

M1  M2  M3

TJ2  TJ4  TJ6

V=0V  V=0V

V=0V  V=0V

G

TJ1  TJ3  TJ5

U PHASE  V PHASE  W PHASE

13

*Fig. 4*

**EP 1 981 160 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0792008 A
- JP 2005143232 B
- US 5923135 A